# EUROPEAN PATENT SPECIFICATION

(11) **EP 0 779 027 B1**
(45) Date of publication and mention of the grant of the patent: **29.12.1999**
(21) Application number: 97200326.3
(22) Date of filing: 02.10.1995
(51) Int. Cl.: A01K 5/00

(54) **A device and a method for mixing fodder**
Vorrichtung und Verfahren zum Mischen von Futter
Dispositif et procédé pour mélanger de fourrage

(30) Priority: 10.10.1994 NL 9401662
(43) Date of publication of application: 18.06.1997
(62) Divisional of application: 95202641.7
(73) Proprietor: Trioliet Mullos B.V., NL-7581 HE Losser (NL)
(72) Inventor: van der Plas, Nicolaas, 7576 WB Oldenzaal (NL)
(74) Representative: Louet Feisser, Arnold

(56) References cited:
- EP-A- 0 003 813
- EP-A- 0 432 702
- EP-A- 0 506 158
- EP-A- 0 540 130
- DE-A- 2 726 203
- US-A- 4 432 499

## Description

The invention relates to a movable mixing device for mixing fodder, which device is provided with a mixing chamber comprising one or more rotors which are rotatable about a vertical axis. The term fodder in this description is to be given a wide interpretation, it comprises silage, among other things, but also all other types of fodder that need to undergo a mixing operation before being fit for consumption.

Mixing devices provided with a rotor which is rotatable about a vertical axis are known in agriculture, (see for example EP-A-0 003 813). Such devices generally have a mixing chamber provided with a side wall which slopes upwards toward the outside. Material to be mixed, for example silage, is introduced into the device from above, after which it is processed by the rotor, which is provided with mixing means. A conveyor belt may for example be used for introducing material into the mixing chamber, which conveyor belt transports the material to above the device and then drops it into the mixing chamber. After having undergone the required processing in the mixing chamber, the fodder may be discharged through an opening in the side wall of the mixing chamber to a conveyor belt, which can subsequently carry off said fodder to the desired location.

The object of the invention is to provide an improved machine for mixing fodder.

The device is provided with a mixing chamber, which may be filled through an opening in the side wall thereof. It is possible thereby to design part of the side wall of the mixing chamber such that said part of the side wall is used to introduce material into the mixing chamber when filling said mixing chamber.

Preferably the feed opening of the mixing chamber is located at the rear side of the device. The part of the side wall which closes the mixing chamber during mixing and which is open during filling will be called the moving means herein.

The moving means may also be in the form of a wall part of the mixing chamber, which can pivot about a substantially horizontal pivot axis located near the bottom of the mixing chamber. As a result of this the wall part, hereinafter also called loading board, can pivot downwards to the floor or to a position near the floor, after which the material may be deposited on the loading board. The term floor refers to the floor on which the device or the tractor to which the device is attached stands. The material is then introduced into the mixing chamber as a result of the pivoting of the loading board to the closed position. Also in this embodiment of the invention guide plates may be provided for correctly guiding the material to the mixing chamber.

The above-described loading board may also be provided with'-cutting means, for example for cutting off silage, whereby said cutting means are mounted in such manner as to capable of pivoting movement with respect to the loading board and - whereby said cutting means can pivot upwards along with the loading board to the closed position.

The invention furthermore relates to a method for mixing fodder, wherein the mixing chamber, which is provided with a rotor which rotates about a vertical axis, is filled with material through an opening in the side wall.

If the mixing chamber of the device is provided with a bottom, part of which can hinge so as to form a feed opening or a discharge opening, whereby the hinge is located near the bottom in substantially horizontal direction, the fixed part of the bottom is preferably extended beyond said hinge, so that the hinge remains free from the material to be mixed.

Further aspects of the invention are disclosed in the following description of the Figures and defined in the claims.
Figure 1 is a plan view of an embodiment of a mixing device;
Figure 2 is a sectional view along the line II - II in Figure 1;
Figure 3 is a rear view of the device according to Figure 1;
Figure 4 is a plan view of the same embodiment in a different position;
Figure 5 is a sectional view along the line V - V in Figure 4;
Figure 6 is a rear view of the device according to Figure 4;
Figure 7 shows an embodiment comprising a loading board provided with a cutting means, and
Figure 8 shows the embodiment according to Figure 7 in a different position.

The figures are only very diagrammatic illustrations of embodiments, wherein like parts are numbered alike. Although the device according to the invention may be constructed in such a manner that it can be mounted in the three-point linkage of a tractor, the illustrated embodiments are provided with wheels 1 and coupling means 2, by means of which the device can be hitched to a drawing vehicle. The device is driven by means of a drive shaft 3, which can be coupled to the power take-off of the drawing vehicle. In the embodiments the rotor is driven by means of a chain drive provided with a chain 4, which is coupled to the power take-off shaft 3 by means of a right-angled transmission 5. The advantage of a chain transmission is that a high reduction can be obtained and that the driving gear can be of flat construction, so that it does not project downwards too much.

In the embodiments the device according to the invention is provided with one or two rotors 6, which are rotatable about a substantially vertical axis. Like the other parts of the device, the rotors 6 are only diagrammatically indicated, and in particular the mixing means secured to the rotors, which may have a great many different shapes, are only diagrammatically indicated as disc-shaped parts 7 in most of the Figures.

The device comprises a mixing chamber 8, in which the rotors 6 can rotate, which mixing chamber 8 has a bottom 9, through which said rotors 6 extend and under which the rotor drive comprising a chain 4 and chain wheels 3 is mounted. The mixing chamber 8 is furthermore provided with a side wall 11, which slopes upwards from the bottom 9 towards the outside. The side wall 11 may be round or oval, when seen in plan view, or have an otherwise elongated shape extending either in transverse direction or in the longitudinal direction of the device.

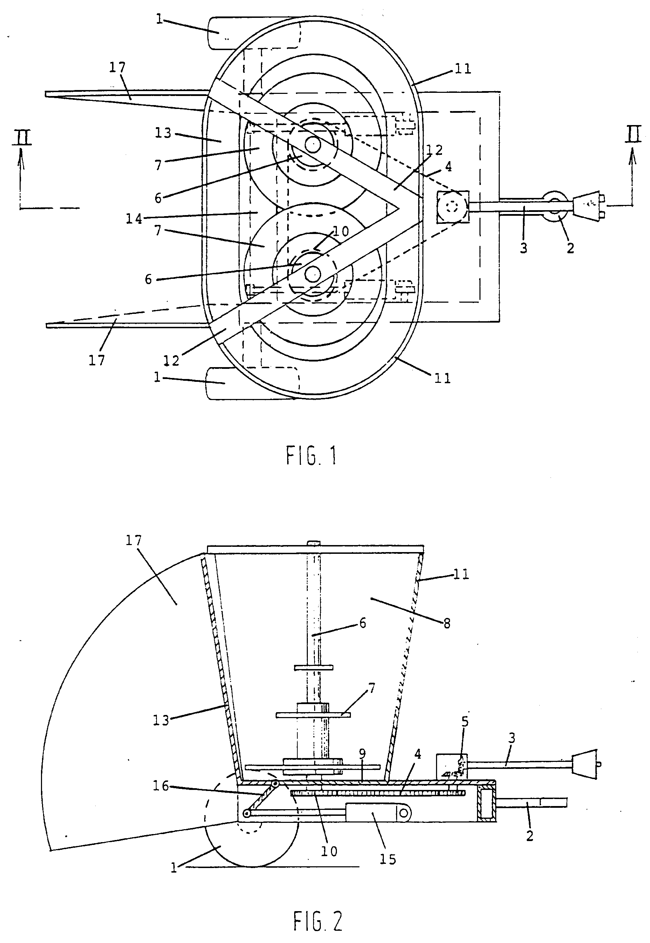

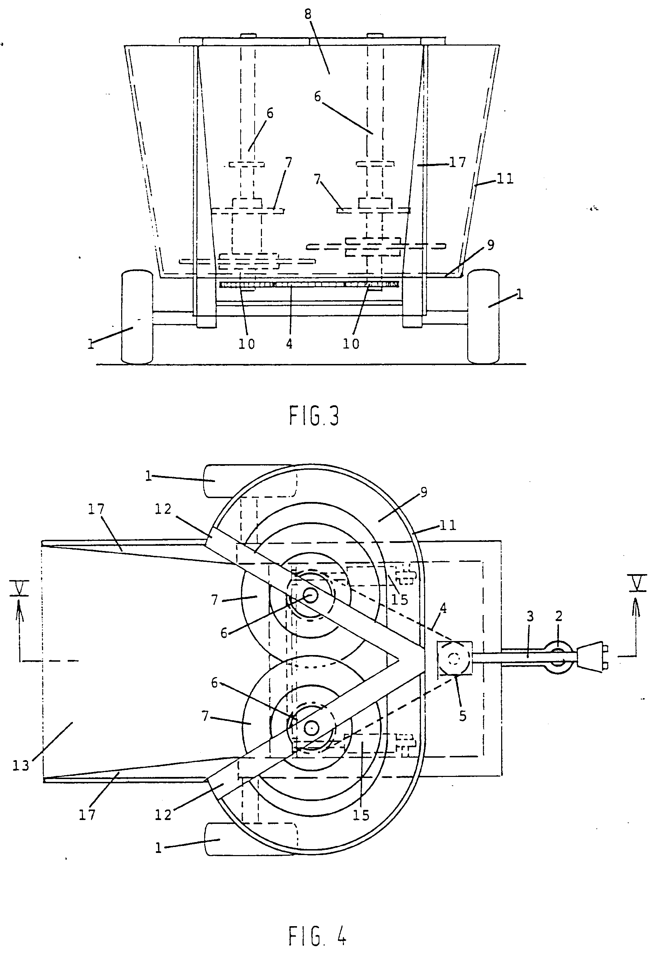

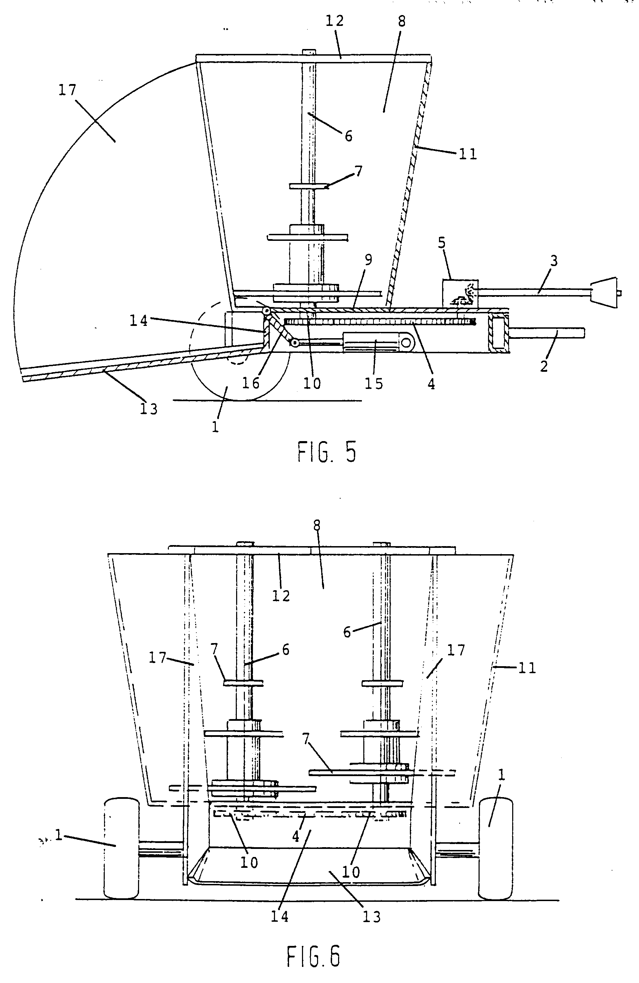

A first embodiment is shown in Figures 1 - 6. Figure 1 is a plan view of a device comprising two rotors 6, whereby the lowermost of the (diagrammatically illustrated) mixing means overlap (seen in plan view). The lowermost mixing means 7 are thereby larger than the mixing means 7 disposed thereabove. The rotors 6 are journalled in the bottom 9 of the device, as well as in supporting beams 12, which are secured to the upper edge of the side wall 11.

In all embodiments the mixing chamber 8 may be filled with material through a recess in the side wall 11 located at the rear side of the device. The material may consist of silage, which is cut from a stock, or of any other material or mixture of materials that are to be mixed.

In the embodiment according to Figure 1 the rear wall part 13 of side wall 11, together with a bottom part 14, can pivot about a substantially horizontal pivot axis located in the bottom 9 and extending in the transverse direction of the device. The wall part 13 can be swung back so far that its edge will come to lie near the floor or on the floor. The pivoting movement of the wall part 13 is effected by the control cylinder 15, which is connected to the pivoted part by means of arm 16. Furthermore means may be provided for moving the wheels 1 upwards with respect to the device, so that the device can be moved to a position closer to the floor. After the material to be mixed has been deposited on wall part 13, the control cylinder 15 can pivot the wall part 13 upwards, so that said wall part butts against the other part of side wall 11. The material to be mixed will then land in the mixing chamber 8. In order to prevent material from falling sideways off the wall part 13, guide walls 17 are provided on either side of the path of movement of the wall part 13, said guide walls in this embodiment extending obliquely outwards in rearward as well as in upward direction, whereby said guide walls have a slightly curved surface.

The diagrammatically illustrated vertical rotors may have any desired shape and the mixing means 7 may be provided with any desired type of catching means, such as blades, whilst in addition they may be slightly helical, so that the material is moved upwards during rotation. The two rotors 7 may rotate in the same direction, as shown in the embodiment, as a result of which some cutting of the material will take place by the overlapping mixing means. The rotors 7 may also rotate in opposite directions, to which end the drive chain 4 must be guided into a different path, of course, or whereby a different type of drive is used.

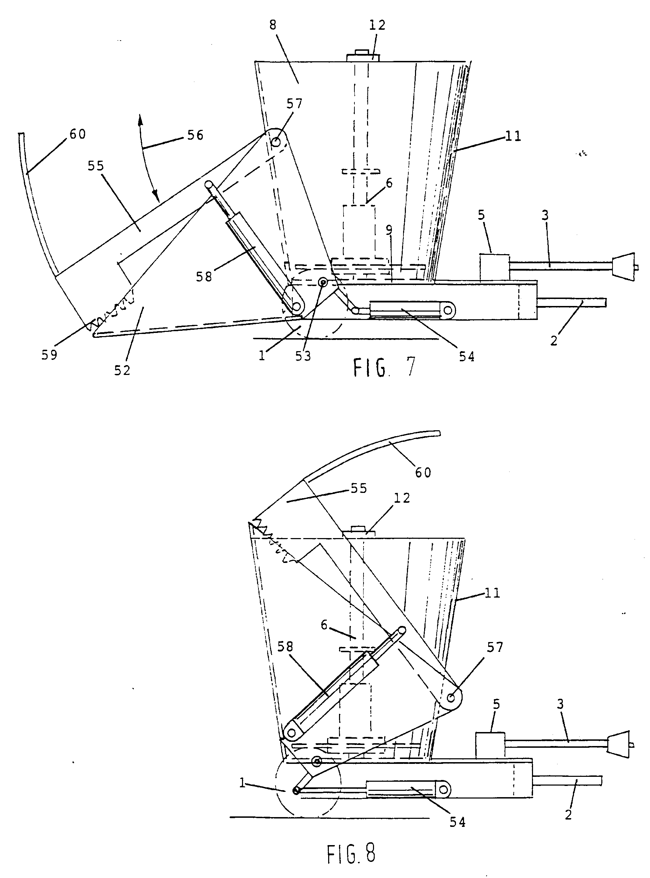

Figure 7 shows another embodiment, wherein the device is provided with a pivoted loading unit 52, which can be pivoted about a pivot pin 53 by means of a control cylinder 54. A cutting device 55 is pivoted to loading unit 52, which cutting device can be pivoted about pivot pin 57 by means of control cylinder 58. The cutting device 55 is provided with cutting means 59, which may or may not be movable, by means of which silage may be cut from a stock, for example. The guide plate 50 thereby ensures that the cut-off silage lands in the loading unit 52. When sufficient material has been cut off, the entire loading unit can be pivoted about pivot pin 53 to the position shown in Figure 8, whereby the cut-off material is deposited in the mixing chamber.

The construction is not limited to the illustrated embodiments, which are only given by way of illustration.

## Claims

1. A movable mixing device for mixing fodder, which device is provided with a mixing chamber (8) comprising one or more rotors (6) which are rotatable about a vertical axis, which mixing chamber (8) is provided with a bottom (9) and with wall parts (11) which slope upwards toward the outside, characterized in that filling means are present for filling said mixing chamber (8), said means comprising a closable opening in a side wall (11) of said mixing chamber (8), through which the material to be mixed can be fed to the mixing chamber (8), whereby said feed opening may be closed during the mixing operation by a moving means which introduces the material into the mixing chamber (8) while said filling takes place, said moving means is pivotable about a pivot axis located near the lower part of the mixing chamber (8).

2. A device according to claim 1, characterized in that the moving means comprise a part of the side wall which can be swung down in such a manner that its edge can be moved to a position near the ground.

3. A device according to any one of the preceding claims, characterized in that said feed opening is bounded by guide walls (17), along which the moving means can move and which guide the material to the mixing chamber (8).

4. A device according to claim 3, characterized in that a lower guide wall (17) extends outwards to a position near the floor on which the device stands.

5. A device according to any one of the preceding claims, characterized in that said filling means comprise a part (13) of the side wall (11) and a part (14) of the bottom (9) of the mixing chamber (8), which parts (13,14) are jointly pivoted about a pivot axis located in the bottom (9), which extends in transverse direction, whereby the edge of the pivoted part (13,14) located furthest from said pivot axis can butt against the floor on which the device stands.

6. A device according to claim 5, characterized in that said opening is provided with two guide walls (17) extending outwards with respect to the mixing chamber (8), along which the pivoted part (13,14) can move and which laterally bound said feed opening.

7. A device according to any one of the preceding claims, characterized in that said moving means is provided with a pivoted cutting means, which is capable of cutting material from a stock, which material is introduced into said mixing chamber by swinging up the swing-down part.

8. A method for mixing fodder, wherein said fodder is processed by one or more rotors (6) which rotate about a vertical axis, whereby the mixing chamber (8) is filled through an opening in the side wall (11) thereof, which opening is closed by moving means which can pivot about an axis near the lower part of the mixing chamber (8).

## Patentansprüche

1. Mobile Mischvorrichtung zum Mischen von Futter, wobei die Vorrichtung mit einer Mischkammer (8) versehen ist, die einen oder mehrere Rotoren (6) umfaßt, die um eine vertikale Achse gedreht werden können, und die Mischkammer (8) mit einem Boden (9) und mit Wandteilen (11) versehen ist, die nach oben nach außen hin aufgeweitet sind, **dadurch gekennzeichnet,** daß eine Fülleinrichtung zum Füllen der Mischkammer (8) vorhanden ist, wobei die Einrichtung eine verschließbare Öffnung in einer Seitenwand (11) der Mischkammer (8) umfaßt, über die das zu mischende Material der Mischkammer (8) zugeführt werden kann, die Zuführöffnung beim Mischvorgang mit einer beweglichen Einrichtung geschlossen werden kann, die das Material während des Füllens in die Mischkammer (8) einleitet, und die bewegliche Einrichtung um eine Schwenkachse geschwenkt werden kann, die sich in der Nähe des unteren Teils der Mischkammer (8) befindet.

2. Vorrichtung nach Anspruch 1, **dadurch gekennzeichnet,** daß die bewegliche Einrichtung einen Teil der Seitenwand umfaßt, der so nach unten geschwenkt werden kann, daß sein Rand an eine Position in der Nähe des Bodens bewegt werden kann.

3. Vorrichtung nach einem der vorangehenden Ansprüche, **dadurch gekennzeichnet,** daß die Zuführöffnung durch Leitwände (17) begrenzt wird, an denen entlang sich die bewegliche Einrichtung bewegen kann und die das Material in die Mischkammer (8) leiten.

4. Vorrichtung nach Anspruch 3, **dadurch gekennzeichnet,** daß eine untere Leitwand (17) sich nach außen an eine Position in der Nähe des Bodens erstreckt, auf dem die Vorrichtung steht.

5. Vorrichtung nach einem der vorangehenden Ansprüche, **dadurch gekennzeichnet,** daß die Fülleinrichtung einen Teil (13) der Seitenwand (11) und einen Teil (14) des Bodens (9) der Mischkammer (8) umfaßt, wobei die Teile (13, 14) zusammen um eine Schwenkachse schwenkbar gelagert sind, die sich im Boden (9) befindet und in Querrichtung verläuft, und der Rand des Schwenkteils (13, 14), der am weitesten von der Schwenkachse entfernt ist, auf dem Boden aufliegen kann, auf dem die Vorrichtung steht.

6. Vorrichtung nach Anspruch 5, **dadurch gekennzeichnet,** daß die Öffnung mit zwei Leitwänden (17) versehen ist, die sich in bezug auf die Mischkammer (8) nach außen erstrecken und an denen sich der Schwenkteil (13, 14) bewegen kann und die die Zuführöffnung seitlich begrenzen.

7. Vorrichtung nach einem der vorangehenden Ansprüche, **dadurch gekennzeichnet,** daß die bewegliche Einrichtung mit einer schwenkbar gelagerten Schneideinrichtung versehen ist, die Material von einem Vorrat abschneiden kann, wobei das Material in die Mischkammer eingeleitet wird, indem der nach unten geschwenkte Teil nach oben geschwenkt wird.

8. Verfahren zum Mischen von Futter, wobei das Futter mit einem oder mehreren Rotoren (6) bearbeitet wird, die sich um eine vertikale Achse drehen, die Mischkammer (8) über eine Öffnung in ihrer Seitenwand (11) gefüllt wird und die Öffnung mit einer beweglichen Einrichtung verschlossen wird, die um eine Achse in der Nähe des unteren Teils der Mischkammer (8) geschwenkt werden kann.

## Revendications

1. Un dispositif mobile de mélange pour mélanger du fourrage, lequel dispositif est muni d'une chambre de mélange (8) comprenant un ou plusieurs rotors (6) qui sont susceptibles de tourner autour d'un axe vertical, laquelle chambre de mélange (8) est munie d'un fond (9) et de parties de parois (11) qui sont inclinées vers le haut en direction de l'extérieur, caractérisé en ce que des moyens de remplissage sont présents pour remplir ladite chambre de mélange (8), lesdits moyens comprenant une ouverture susceptible d'être obturée dans une paroi latérale (11) de ladite chambre de mélange (8), à travers laquelle ouverture le matériau à mélanger peut être fourni à la chambre de mélange (8), de telle manière que ladite ouverture d'alimentation puisse être obturée pendant l'opération de mélange par des moyens mobiles qui introduisent le matériau dans la chambre de mélange (8), tandis que ledit remplissage se produit, lesdits moyens de déplacement étant susceptibles de pivoter autour d'un axe de pivotement situé à proximité de la partie inférieure de la chambre de mélange (8).

2. Un dispositif selon la revendication 1, caractérisé en ce que les moyens mobiles comportent une partie de la paroi latérale que l'on peut faire pivoter vers le bas de telle façon que son bord puisse être déplacé vers une position proche du sol.

3. Un dispositif selon l'une quelconque des revendications précédentes, caractérisé en ce que ladite ouverture d'alimentation est délimitée par des parois de guidage (17), le long desquelles les moyens mobiles peuvent se déplacer et qui guident le matériau vers la chambre de mélange (8).

4. Un dispositif selon la revendication 3, caractérisé en ce qu'une paroi inférieure de guidage (17) s'étend à l'extérieur vers une position proche du plancher sur lequel repose le dispositif.

5. Un dispositif selon l'une quelconque des revendications précédentes, caractérisé en ce que lesdits moyens de remplissage comportent une partie (13) de la paroi latérale (11) et une partie (14) du fond (9) de la chambre de mélange, lesquelles parties (13, 14) sont susceptibles de pivoter simultanément autour d'un axe de pivotement situé dans le fond (9) et qui s'étend dans la direction transversale, de telle manière que le bord de la partie pivotée (13, 14) située le plus loin dudit axe de pivotement puisse venir buter contre le plancher sur lequel repose le dispositif.

6. Un dispositif selon la revendication 5, caractérisé en ce que ladite ouverture est munie de deux parois de guidage (17) s'étendant à l'extérieur par rapport à la chambre de mélange (8), et le long desquelles les parties pivotées (13, 14) peuvent se déplacer et qui délimitent latéralement ladite ouverture d'alimentation.

7. Un dispositif selon l'une quelconque des revendications précédentes, caractérisé en ce que lesdits moyens mobiles sont munis de moyens de coupe pivotants, lesquels sont capables de couper du matériau à partir d'un stock (de matériau) lequel matériau est introduit dans ladite chambre de mélange en faisant pivoter vers le haut la partie pivotée vers le bas.

8. Un procédé pour mélanger du fourrage, dans lequel ledit fourrage est traité par un ou plusieurs rotors (8) qui tournent autour d'un axe vertical, de telle manière que la chambre de mélange (8) soit remplie par l'intermédiaire d'une ouverture dans la paroi latérale (11) de la chambre, laquelle ouverture est obturée par des moyens mobiles qui peuvent pivoter autour d'un axe proche de la partie inférieure de la chambre de mélange (8).
